# EUROPEAN PATENT SPECIFICATION

(11) **EP 3 496 360 B1**
(45) Date of publication and mention of the grant of the patent: **20.05.2026**
(21) Application number: 17836439.4
(22) Date of filing: 07.08.2017
(51) Int. Cl.: H04L 67/131

(54) **VIRTUAL APPLICATION ATTRIBUTE UPDATE METHOD AND APPARATUS, AND STORAGE MEDIUM**
VERFAHREN UND VORRICHTUNG ZUR AKTUALISIERUNG VON ATTRIBUTEN EINER VIRTUELLEN ANWENDUNG UND SPEICHERMEDIUM
PROCÉDÉ ET APPAREIL DE MISE À JOUR D'ATTRIBUT D'APPLICATION VIRTUELLE ET SUPPORT D'INFORMATIONS

(30) Priority: 05.08.2016 CN 201610639735
(43) Date of publication of application: 12.06.2019
(73) Proprietor: Tencent Technology (Shenzhen) Company Limited, Shenzhen, Guangdong, 518057 (CN)
(72) Inventor: YU, Jin, Shenzhen City Guangdong 518057 (CN); LIU, Tian, Shenzhen City Guangdong 518057 (CN); WANG, Chunhe, Shenzhen City Guangdong 518057 (CN); ZHANG, Tao, Shenzhen City Guangdong 518000 (CN)
(74) Representative: Gunzelmann, Rainer
(86) International application number: PCT/CN2017/096197
(87) International publication number: WO 2018/024258

(56) References cited:
- CN-A- 104 801 040
- CN-A- 105 511 930
- CN-A- 106 302 418
- US-A1- 2009 104 960
- US-A1- 2015 072 793
- DENG. YONGJIAN: "The Design and Realization of Networked Mobile Game AI Behaviour Trees", CHINA MASTER'S THESES FULL-TEXT DATABASE, vol. 1138-867, 15 January 2015 (2015-01-15), pages 1 - 76, XP009512869, ISSN: 1674-0246

## Description

### RELATED APPLICATION

This application claims priority to Chinese Patent Application No. 2016106397358, entitled "METHOD AND APPARATUS FOR UPDATING VIRTUAL APPLICATION ATTRIBUTE" filed with the Patent Office of China on August 5, 2016.

### FIELD OF THE TECHNOLOGY

Embodiments of the present invention relate to the field of computers, specifically, to a method and an apparatus for updating a virtual application attribute, and a storage medium.

### BACKGROUND OF THE DISCLOSURE

Currently, in virtual applications, a function of accumulating event resources exists. For example, in games, in particular, in fighting-genre games, the function of accumulating event resources exists. In an anger system of The King of Fighters 97, as early as fighting-genre games, such as The King of Fighters, accumulating event resources to improve game player experience exists. The accumulating event resources may be accumulating anger in a virtual application, and the accumulating anger enables a player to have experience of releasing the ultimate. However, such experience is relatively simple and is merely experience of anger accumulation-anger release, and a virtual application attribute cannot be updated according to an event resource.

In addition, in Onimusha 3 in the related technology, anger is accumulated and converted into an ability bean. When a player releases anger, a capability is improved to a specific extent, and meanwhile, there is a notable change in terms of expression. However, a virtual application attribute still cannot be updated according to an event resource.

For the foregoing problem that a virtual application attribute cannot be updated according to an event resource, no effective solution has been provided currently.

Document US 2009/0104960 discloses a method for enabling casino-based tournament gaming.

### SUMMARY

The present invention concerns a method for updating a virtual application attribute according to claim 1, and an apparatus for updating a virtual application attribute according to claim 10. Further aspects of the invention are defined in the dependent claims. Embodiments of the present invention provide a method and an apparatus for updating a virtual application attribute, and a storage medium, to resolve at least the technical problem that a game attribute cannot be updated according to an event resource in the related technology.

According to an aspect of the embodiments of the present invention, a method for updating a virtual application attribute is provided. The method for updating a virtual application attribute includes: obtaining, in a running process of a virtual application client, a first event resource that is in a temporary state and that is generated by executing a first event by a first account of the virtual application client; converting a second event resource that is in the temporary state and that is obtained before the first event resource into the second event resource in a normal state; adding the second event resource to an event resource that is in the normal state and that has been obtained; and when a predetermined operation performed on the event resource in the normal state is detected, updating a virtual application attribute of the first account in the virtual application client.

According to another aspect of the embodiments of the present invention, an apparatus for updating a virtual application attribute is further provided. The apparatus for updating a virtual application attribute includes: an obtaining unit, configured to in a running process of a virtual application client, obtain a first event resource that is in a temporary state and that is generated by executing a first event by a first account of the virtual application client; a first conversion unit, configured to convert a second event resource that is in the temporary state and that is obtained before the first event resource into the second event resource in a normal state; a first addition unit, configured to add the second event resource to an event resource that is in the normal state and that has been obtained; and an updating unit, configured to when a predetermined operation performed on the event resource in the normal state is detected, update a virtual application attribute of the first account in the virtual application client.

According to another aspect of the embodiments of the present invention, a terminal is further provided. The terminal is configured to execute program code, the program code being used for executing steps in the method for updating a virtual application attribute according to the embodiments of the present invention.

According to another aspect of the embodiments of the present invention, a storage medium is further provided. The storage medium is configured to execute program code, the program code being used for executing steps in the method for updating a virtual application attribute according to the embodiments of the present invention.

In the embodiments of the present invention, by obtaining, in a running process of a virtual application client, a first event resource that is in a temporary state and that is generated by executing a first event by a first account of the virtual application client, converting a second event resource that is in the temporary state and that is obtained before the first event resource into the second event resource in a normal state, adding the second event resource to an event resource that is in the normal state and that has been obtained, and when a predetermined operation performed on the event resource in the normal state is detected, updating a virtual application attribute of the first account in the virtual application client, the virtual application attribute is updated, thereby producing a technical effect of updating a virtual application attribute according to an event resource and resolving a technical problem that a game attribute cannot be updated according to an event resource in the related technology.

### BRIEF DESCRIPTION OF THE DRAWINGS

Accompanying drawings described herein are used to provide further understanding about the present disclosure, and constitute one portion of the present disclosure. Exemplary embodiments of the present disclosure and their descriptions are used to explain the present disclosure, and do not constitute an inappropriate limitation on the present disclosure, wherein:
FIG. 1 is a schematic diagram of a hardware environment of a method for updating a virtual application attribute according to an embodiment of the present invention;
FIG. 2 is a flowchart of a method for updating a virtual application attribute according to an embodiment of the present invention;
FIG. 3 is a flowchart of another method for updating a virtual application attribute according to an embodiment of the present invention;
FIG. 4 is a flowchart of another method for updating a virtual application attribute according to an embodiment of the present invention;
FIG. 5 is a flowchart of a method for updating a virtual application attribute of a first account in a virtual application client according to an embodiment of the present invention;
FIG. 6 is a flowchart of a method for obtaining a first event resource that is in a temporary state and that is generated by executing a first event by a first account of a virtual application client according to an embodiment of the present invention;
FIG. 7 is a flowchart of another method for updating a virtual application attribute according to an embodiment of the present invention;
FIG. 8 is a flowchart of a method for calculating an event resource according to an embodiment of the present invention;
FIG. 9 is a flowchart of another method for updating a virtual application attribute according to an embodiment of the present invention;
FIG. 10 is a schematic diagram of updating another virtual application attribute according to an embodiment of the present invention;
FIG. 11 is a schematic diagram of an apparatus for updating a virtual application attribute according to an embodiment of the present invention;
FIG. 12 is a schematic diagram of another apparatus for updating a virtual application attribute according to an embodiment of the present invention;
FIG. 13 is a schematic diagram of another apparatus for updating a virtual application attribute according to an embodiment of the present invention;
FIG. 14 is a schematic diagram of another apparatus for updating a virtual application attribute according to an embodiment of the present invention;
FIG. 15 is a schematic diagram of another apparatus for updating a virtual application attribute according to an embodiment of the present invention; and
FIG. 16 is a structural block diagram of a terminal according to an embodiment of the present invention.

### DESCRIPTION OF EMBODIMENTS

To make a person skilled in the art understand the solutions in the present disclosure better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be noted that the terms "first", "second", and the like in the specification, the claims, and the foregoing accompanying drawings of the present disclosure are merely used for distinguishing similar objects, and do not need to be used for describing a special sequence or order. It should be understood that data used in this way can be interchanged in an appropriate case, so that the embodiments of the present disclosure that are described herein can be implemented in a sequence other than those sequences illustrated or described herein. Moreover, the terms "include", "have", and any variants thereof are intended to cover a non-exclusive inclusion. Therefore, a process, method, system, product, or device that includes a series of steps or elements not only includes such steps or elements that are clearly listed, but also includes other steps or elements that are not clearly listed or that are inherent to the process, method, product, or device.

According to the embodiments of the present invention, an embodiment of a method for updating a virtual application attribute is provided.

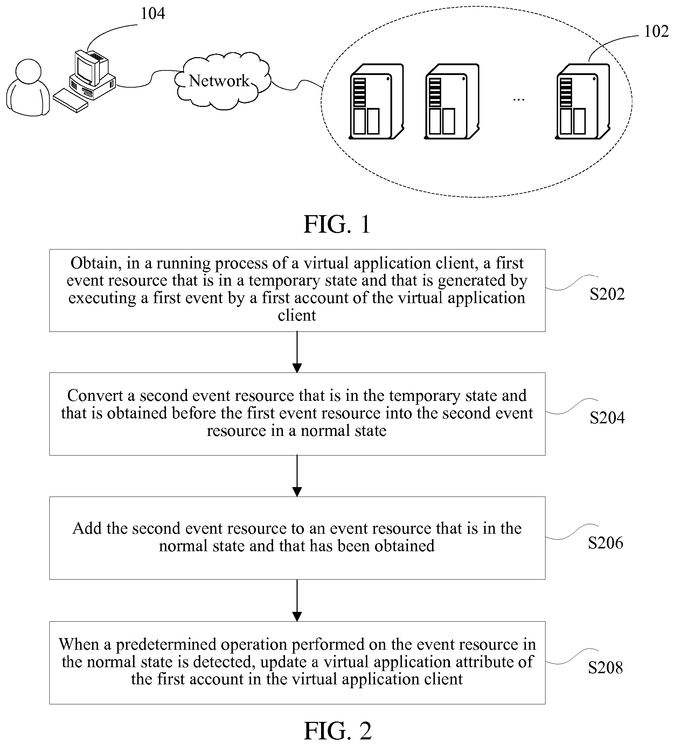

Optionally, in this embodiment, the foregoing method for updating a virtual application attribute may be applied to a hardware environment formed by a server 102 and a terminal 104 shown in FIG. 1. FIG. 1 is a schematic diagram of a hardware environment of a method for updating a virtual application attribute according to an embodiment of the present invention. As shown in FIG. 1, a server 102 is connected to a terminal 104 through a network. The foregoing network includes, but is not limited to, a wide area network, a metropolitan area network, or a local area network. The terminal 104 includes, but is not limited to, a computer, a mobile phone, a tablet computer, or the like. The method for updating a virtual application attribute in the embodiments the present invention can be performed by the server 102, or be performed by the terminal 104, or be performed by the server 102 and the terminal 104 together. The terminal 104 may perform the method for updating a virtual application attribute in the embodiments of the present invention by using a client installed on the terminal 104.

FIG. 2 is a flowchart of a method for updating a virtual application attribute according to an embodiment of the present invention. As shown in FIG. 2, the method for updating a virtual application attribute may include the following steps.

Step S202: Obtain, in a running process of a virtual application client, a first event resource that is in a temporary state and that is generated by executing a first event by a first account of the virtual application client.

In the technical solution provided by the foregoing step S202 of the present disclosure, in a running process of a virtual application client, a first event resource that is in a temporary state and that is generated by executing a first event by a first account of the virtual application client is obtained.

In a running process of a virtual application client, a first account corresponds to a virtual application character in a virtual application, and a player of the virtual application controls the virtual application character to execute an event by operating the client. The event is an action executed by the virtual application character. For example, the virtual application is a game, the first account corresponds to a game character in the game, and a game player controls the game character to execute an event by operating a game client. The event is an action executed by the game character. When the first account executes the first event, a first event resource in a temporary state is generated, and the first event resource may be an award value for a virtual application player after the virtual application player executes the first event, for example, corresponding experience values that are generated when events of different attack actions are executed to attack a rival.

Step S204: Convert a second event resource that is in the temporary state and that is obtained before the first event resource into the second event resource in a normal state.

In the technical solution provided by the foregoing step S204 of the present disclosure, a second event resource that is in the temporary state and that is obtained before the first event resource is converted into the second event resource in a normal state.

Before the first event resource is obtained, the second event resource that is in the temporary state and that is generated by executing the second event by the first account of the virtual application client is obtained, and after the second event resource is obtained, the first event resource is obtained. The above is equivalent to consecutively obtaining event resources. After the first event resource that is in the temporary state and that is generated by executing the first event by the first account of the virtual application client is obtained, the second event resource is converted into the second event resource in the normal state.

Step S206: Add the second event resource to an event resource that is in the normal state and that has been obtained.

In the technical solution provided by the foregoing step S206 of the present disclosure, the second event resource is added to an event resource that is in the normal state and that has been obtained.

The event resource that is in the normal state and that has been obtained is stored at a preset storage location. After the second event resource is converted into the second event resource in the normal state, the second event resource is added to the event resource that is in the normal state and that has been obtained, so as to continuously accumulate event resources that have been converted from the temporary state to the normal state.

Optionally, when a first event resource that is in the temporary state and that is generated by executing the first event by the first account of the virtual application client cannot be obtained, event resources at the preset storage location are continuously lost. In a process of losing the event resources, if a first event resource that is in the temporary state and that is generated by
executing the first event by the first account of the virtual application client is obtained, losing of the event resources is stopped.

Optionally, a third event resource that is in the temporary state and that is generated by executing a third event by the first account of the virtual application client is obtained, the first event resource that is in the temporary state is converted into the first event resource in the normal state, and a virtual application character corresponding to the first account can be awarded if event resources are continuously obtained, to make performance of an event resource obtained next time better than that of an event resource obtained currently.

Step S208: When a predetermined operation performed on the event resource in the normal state is detected, update a virtual application attribute of the first account in the virtual application client.

In the technical solution provided by the foregoing step S208 of the present disclosure, when a predetermined operation performed on the event resource in the normal state is detected, a virtual application attribute of the first account in the virtual application client is updated.

In a process of continuously accumulating event resources that have been converted from the temporary state to the normal state, a predetermined operation is performed on the event resources in the normal state. For example, when a quantity of the event resources have been converted from the temporary state to the normal state reaches a specific value, a touch operation, such as a tap, a double tap, and a slide, is performed on an icon, used for indicating that the quantity of the event resources have been converted from the temporary state to the normal state reaches the specific value, on the client. The first account has a virtual application attribute, such as a fighting capacity of a virtual application character, in the virtual application client. When a predetermined operation performed on the event resource in the normal state is detected, the virtual application attribute of the first account in virtual application client is updated. For example, a movement speed and an attack force of a virtual application character corresponding to the first account are improved, a cooldown is reduced, and attributes, such as a health value and a magic value, are rapidly restored.

In the foregoing step S202 to step S208, by obtaining, in a running process of a virtual application client, a first event resource that is in a temporary state and that is generated by executing a first event by a first account of the virtual application client, converting a second event resource that is in the temporary state and that is obtained before the first event resource into the second event resource in a normal state, adding the second event resource to an event resource that is in the normal state and that has been obtained, and when a predetermined operation performed on the event resource in the normal state is detected, updating a virtual application attribute of the first account in the virtual application client, a technical problem that a game attribute cannot be updated according to an event resource in the related technology can be resolved, thereby producing a technical effect of updating a virtual application attribute according to an event resource.

In an optional embodiment, after the second event resource is added to an event resource that is in the normal state and that has been obtained, whether to delete the first event resource in the temporary state is determined according to whether a third event resource that is in the temporary state and that is generated by executing the first event by the first account is obtained within a first predetermined time segment.

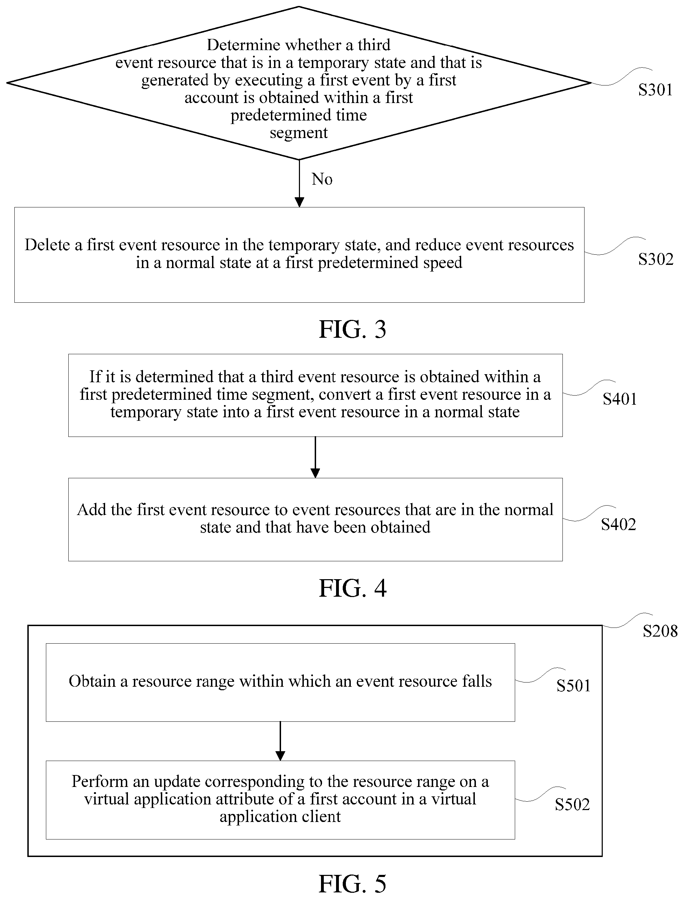

FIG. 3 is a flowchart of another method for updating a virtual application attribute according to an embodiment of the present invention. As shown in FIG. 3, the method for updating a virtual application attribute further includes the following steps.

Step S301: Determine whether a third event resource that is in the temporary state and that is generated by executing the first event by the first account is obtained within a first predetermined time segment.

In the technical solution provided by the foregoing step S301 of the present disclosure, after the second event resource is added to an event resource that is in the normal state and that has been obtained, whether a third event resource that is in the temporary state and that is generated by executing the first event by the first account is obtained within a first predetermined time segment is determined.

The first account executes the first event to generate the third event resource in the temporary state, and whether the third event resource is obtained within the first predetermined time segment is determined.

Step S302: When the third event resource that is in the temporary state and that is generated by executing the first event by the first account is not obtained within the first predetermined time segment, delete the first event resource in the temporary state, and reduce the event resources in the normal state at a first predetermined speed.

In the technical solution provided by the foregoing step S302 of the present disclosure, if it is determined that the third event resource is not obtained within the first predetermined time segment, the first event resource in the temporary state is deleted, and the event resources in the normal state are reduced at a first predetermined speed.

After whether a third event resource that is in the temporary state and that is generated by executing the first event by the first account is obtained within a first predetermined time segment is determined, if it is determined that the third event resource is not obtained within the first predetermined time segment, that is, after a first event resource that is in the temporary state and that is generated by executing the first event by the first account of the virtual application client is not obtained, when an event resource that is in the temporary state and that is generated by executing the first event is continuously obtained, the first event resource in the temporary state is deleted, that is, the first event resource disappears and cannot be used again, and the event resources in the normal state are reduced at a first predetermined speed, so as to gradually reduce event resources stored at the preset storage location.

In this embodiment, after the second event resource is added to an event resource that is in the normal state and that has been obtained, whether a third event resource that is in the temporary state and that is generated by executing the first event by the first account is obtained within a first predetermined time segment is determined; and if it is determined that the third event resource is not obtained within the first predetermined time segment, the first event resource in the temporary state is deleted, and the event resources in the normal state are reduced at a first predetermined speed, so as to control the event resource.

In an optional implementation, after whether a third event resource that is in the temporary state and that is generated by executing the first event by the first account is obtained within a first predetermined time segment is determined, if it is determined that the third event resource is obtained within the first predetermined time segment, the first event resource in the temporary state is converted into the first event resource in the normal state.

FIG. 4 is a flowchart of another method for updating a virtual application attribute according to an embodiment of the present invention. As shown in FIG. 4, the method for updating a virtual application attribute may alternatively include the following steps.

Step S401: If it is determined that the third event resource is obtained within the first predetermined time segment, convert the first event resource in the temporary state into the first event resource in the normal state.

In the technical solution provided by the foregoing step S401 of the present disclosure, after whether a third event resource that is in the temporary state and that is generated by executing the first event by the first account is obtained within a first predetermined time segment is determined, if it is determined that the third event resource is obtained within the first predetermined time segment, the first event resource in the temporary state is converted into the first event resource in the normal state.

After whether a third event resource that is in the temporary state and that is generated by executing the first event by the first account is obtained within a first predetermined time segment is determined, if it is determined that the third event resource is not obtained within the first predetermined time segment, the first event resource in the temporary state is deleted, and the event resources in the normal state are reduced at a first predetermined speed. In a process of reducing the event resources in the normal state at a first predetermined speed, it is determined that the third event resource is obtained within the first predetermined time segment, the first event resource in the temporary state is converted into the first event resource in the normal state.

Step S402: Add the first event resource to the event resources that are in the normal state and that have been obtained.

In the technical solution provided by the foregoing step S402 of the present disclosure, the first event resource is added to the event resources that are in the normal state and that have been obtained.

After the first event resource in the temporary state is converted into the first event resource in the normal state, the first event resource is added to the event resources that are in the normal state and that have been obtained, so as to accumulate event resources stored at a preset storage location.

In this embodiment, after whether a third event resource that is in the temporary state and that is generated by executing the first event by the first account is obtained within a first predetermined time segment is determined; and if it is determined that the third event resource is obtained within the first predetermined time segment, the first event resource in the temporary state is converted into the first event resource in the normal state. The first event resource is added to the event resources that are in the normal state and that have been obtained, so as to accumulate event resources stored at a preset storage location.

In an optional implementation, in step S208, the updating a virtual application attribute of the first account in the virtual application client includes: updating the virtual application attribute of the first account in the virtual application client by using a resource range within which the event resource falls.

FIG. 5 is a flowchart of a method for updating a virtual application attribute of a first account in a virtual application client according to an embodiment of the present invention. As shown in FIG. 5, the flowchart of the method for updating a virtual application attribute of a first account in a virtual application client includes the following steps.

Step S501: Obtain a resource range within which the event resource falls.

In the technical solution provided by the foregoing step S501 of the present disclosure, a resource range within which the event resource falls is obtained.

A resource range within which the event resource falls is obtained. The resource range corresponds to a size of the event resource. For example, the size of the event resource is measured by a quantity of points. The event resource whose size ranges from 0 to 999 points is stored in a first resource range, and a size of 0 to 999 points corresponds to the first resource range. The event resource whose size ranges from 1000 to 1999 points is stored in a second resource range, and a size of 1000 to 1999 points corresponds to the second resource range.

Step S502: Perform an update corresponding to the resource range on the virtual application attribute of the first account in the virtual application client.

In the technical solution provided by the foregoing step S502 of the present disclosure, an update corresponding to the resource range is performed on the virtual application attribute of the first account in the virtual application client.

Update effects of the virtual application attribute corresponding to different ranges are different. After the resource range within which the event resource falls is obtained, an update corresponding to the resource range is performed on the virtual application attribute of the first account in the virtual application client.

In this embodiment, the virtual application attribute of the first account in the virtual application client is updated by obtaining the resource range within which the event resource falls and performing an update corresponding to the resource range on the virtual application attribute of the first account in the virtual application client, so as to produce a technical effect of updating the virtual application attribute of the first account in the virtual application client according to the event resource.

In an optional implementation, the performing an update corresponding to the resource range on the virtual application attribute of the first account in the virtual application client includes: if the resource range is larger, increasing or reducing the virtual application attribute by a larger magnitude.

The performing an update corresponding to the resource range on the virtual application attribute of the first account in the virtual application client includes: if the resource range is larger, increasing or reducing the virtual application attribute by a larger magnitude.

Update effects of the virtual application attribute corresponding to different ranges are different. If the resource range is larger, an update effect of updating the virtual application attribute is more obvious, and the virtual application attribute is increased or reduced by a larger magnitude, so that a user can obviously perceive the update.

In an optional implementation, the updating a virtual application attribute of the first account in the virtual application client includes at least one of the following: increasing a movement speed of the first account in the virtual application client; increasing an attack force of the first account in the virtual application client; increasing a health value of the first account in the virtual application client; increasing a magic value of the first account in the virtual application client; and reducing a cooldown of the first account in the virtual application client.

To update a virtual application attribute of the first account in the virtual application client, a movement speed of the first account in the virtual application client can be increased, so that the virtual application character corresponding to the first account is more flexible when avoiding a rival or an accident; an attack force of the first account in the virtual application client can be increased, so that damage of the virtual application character corresponding to the first account on a rival is heavier; a health value of the first account in the virtual application client is increased, so that an active time of the virtual application character corresponding to the first account is longer in the client; a magic value of the first account in the virtual application client is increased, so that a capability of the virtual application character corresponding to the first account is stronger; and a cooldown of the first account in the virtual application client is reduced, so that a time interval between an action initiated by the virtual application character corresponding to the first account for a first time and the action initiated for a second time is reduced, thereby improving the virtual application attribute of the first account in the virtual application client.

In an optional implementation, in step S202, the obtaining a first event resource that is in a temporary state and that is generated by executing a first event by a first account of the virtual application client includes: obtaining the first event resource according to a first attribute of an event operation performed in the first event and a second attribute of an operation object of the event operation.

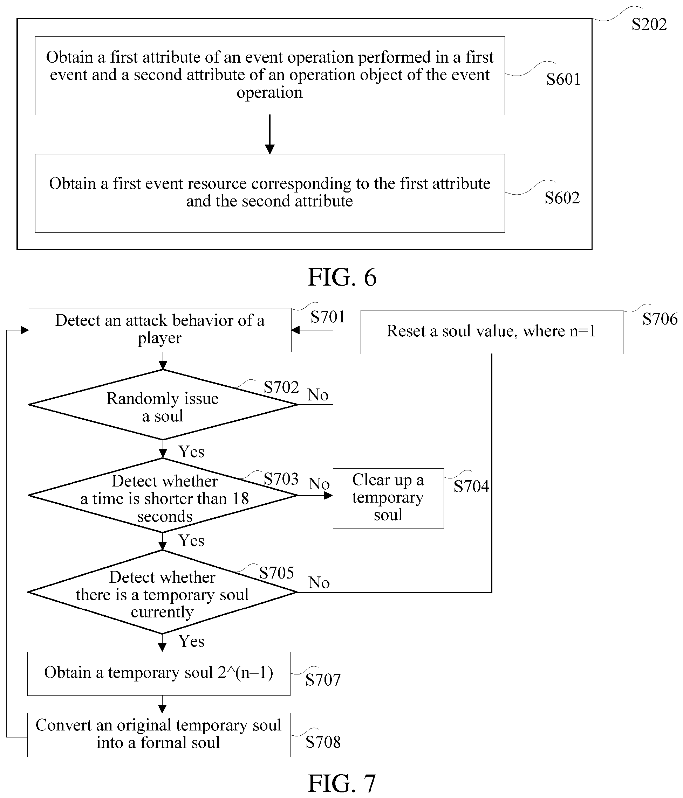

FIG. 6 is a flowchart of a method for obtaining a first event resource that is in a temporary state and that is generated by executing a first event by a first account of a virtual application client according to an embodiment of the present invention. As shown in FIG. 6, the method for obtaining a first event resource that is in a temporary state and that is generated by executing a first event by a first account of a virtual application client includes the following steps.

Step S601: Obtain a first attribute of an event operation performed in the first event and a second attribute of an operation object of the event operation.

In the technical solution provided by the foregoing step S601 of the present disclosure, a first attribute of an event operation performed in the first event and a second attribute of an operation object of the event operation are obtained.

Performing an event operation in the first event is that the first account releases an ability in the virtual application client. In the virtual application client, an event of attacking a rival by the first account is a first event, different attack abilities are event operations, intensity of different attack abilities is used as a first attribute, the rival on which the event operation is performed is an operation object, the rival also has an ability corresponding to an attack, the ability that is of the rival and that corresponds to the attack is used as a second attribute, and the first attribute and the second attribute are obtained.

Step S602: Obtain the first event resource corresponding to the first attribute and the second attribute.

In the technical solution provided by the foregoing step S602 of the present disclosure, the first event resource corresponding to the first attribute and the second attribute is obtained.

The first event resource in the temporary state is related to the first attribute and the second attribute, and after the first attribute and the second attribute are obtained, the first event resource corresponding to the first attribute and the second attribute is obtained.

In this embodiment, the first event resource that is in the temporary state and that is generated by executing the first event by the first account of the virtual application client is obtained by obtaining a first attribute of an event operation performed in the first event and a second attribute of an operation object of the event operation, and obtaining the first event resource corresponding to the first attribute and the second attribute.

In an optional implementation, the obtaining the first event resource corresponding to the first attribute and the second attribute includes: obtaining the first event resource corresponding to the first attribute and the second attribute at a predetermined probability.

When the first event resource corresponding to the first attribute and the second attribute is obtained, different first attributes and second attributes have probabilities for obtaining the first event resource, and optionally, can be used to accumulate event resources without affecting an attack cycle of the virtual application player as much as possible.

In an optional implementation, after the second event resource is added to an event resource that is in the normal state and that has been obtained, the prompt identifier is used for prompting to perform the predetermined operation on the event resource in the normal state.

The virtual application client has an operation interface, used for displaying a proceeding effect of the virtual application. After the second event resource is added to an event resource that is in the normal state and that has been obtained, the virtual application client displays a prompt identifier on the operation interface. Optionally, when a quantity of the event resources in the normal state that have been obtained reaches a specific value, the prompt identifier is displayed on the operation interface to prompt that a predetermined operation, for example, a touch operation such as a tap, a double tap, and a slide, can be performed on the prompt identifier, and an effect that is not produced when the virtual application normally proceeds is produced. For example, a picture that is sufficiently gorgeous and shocking is presented, to stimulate, with intensive feedback, a player to have a mood swing and improve user experience.

It should be noted that, the foregoing first event resource, second event resource, and third event resource are some event resources generated during the running process of the virtual application client, and it does not mean that the event resources of the embodiments of the present invention are merely limited to the foregoing first event resource, second event resource, and third event resource. Other event resources generated during the running process of the virtual application client are processed in manners similar to those for the first event resource, the second event resource, and the third event resource, so as to update the virtual application attribute. Details are not described herein again.

The following further describes the technical solution of the present disclosure with reference to the preferred embodiments.

In a running process of a virtual application client, a first event resource that is in a temporary state and that is generated by executing a first event by a first account of the virtual application client is obtained; a second event resource that is in the temporary state and that is obtained before the first event resource is converted into the second event resource in a normal state; the second event resource is added to an event resource that is in the normal state and that has been obtained; and when a predetermined operation performed on the event resource in the normal state is detected, a virtual application attribute of the first account in the virtual application client is updated.

The foregoing method may be applied to a role-playing game (RPG). A core of a RPG is playing a role, and the RPG is a type of game. In the game, a player is responsible for playing a role that acts in a realistic or fictitious word, and develops the played role by means of some actions under structuralized rules. A success or failure of the player in this process depends on a rule or an action.

The technical solution of the present disclosure is applied to a burst system, a main objective of the burst system is to adjust a fighting mood of a player by updating a game attribute, to enable the player to have a mood swing in a fight and attempt to reduce a boring degree of the player during the fight by means of the mood swing of the player, so that in an early stage (dozens or hundreds of hours), fighting comfort of the player is improved, and it would be easier to consume time.

In a fight, the burst system has a notable node, and experience before the node is obviously different from experience after the node. Complete presentation of this node is a process, and this process may be interrupted by an active or a passive behavior of a player. After the process is interrupted, the player restarts presentation of this node and even exits from this node. During a burst, an update effect of a game attribute is notably prompted, and picture performance that is sufficiently gorgeous and shocking is displayed, to stimulate, with intensive feedback, the player to have a mood swing.

To be able to make a player has a mood swing in a fight by updating a game attribute, a soul value is an event resource, and soul absorption is a process of obtaining the soul value. An event resource that is in a temporary state and that is generated by executing an event by a first account of a game client is formulated a soul absorption rule, an accumulation process of event resources is represented by a soul slot setting, and updating a game attribute of the first account in the game client is set by means of a burst.

The soul absorption rule is introduced below.

A first attribute of an event operation performed in a first event and a second attribute of an operation object of the event operation are obtained. A first event resource corresponding to the first attribute and the second attribute is obtained at a predetermined probability. That is, when a character releases a damage ability such as chopping and knocking, different abilities have different soul absorption probabilities, that is, soul absorption is triggered in a probabilistic manner, and a principle of "not affecting an attack cycle of a player as much as possible, but being capable of being used by the player to extend continuous soul absorption" is followed. The damage ability merely indicates an ability that is directly released and caused by a player. A direct release is an ability behavior that is achieved by a player sensually by "touching a screen once".

Each ability is identified as a damage-type ability or not, and meanwhile, a soul absorption probability of the ability is identified, so as to create an atmosphere of accumulating feelings when different abilities are released.

A soul absorption probability is affected by a target, and for different targets and target groups, the soul absorption would have different quantity and target selections. The soul absorption is affected by a level difference between a player and a target, and an actual soul absorption probability and soul value can be dynamically adjusted.

For example, for a monster in a newbie village, for protecting and guiding a newbie player, the monster needs to have an extra burst probability, so that a player in the newbie village has ultimate pleasure of a release when meeting a burst system, and a depressed feeling during soul absorption is reduced.

FIG. 7 is a flowchart of a method for updating a game attribute according to an embodiment of the present invention. As shown in FIG. 7, the method for updating a game attribute includes the following steps.

Step S701: Detect an attack behavior of a player.

Detecting an attack behavior of a player is during a running process of a game client, detecting an event executed by a first account of the game client.

Step S702: Randomly issue a soul.

Randomly issuing a soul is obtaining, in the running process of the game client, a first event resource that is in a temporary state and that is generated by executing a first event by the first account of the game client. A second event resource that is in the temporary state and that is obtained before the first event resource is converted into the second event resource in a normal state. If a soul is not issued randomly, step S701 is performed, and if a soul is issued randomly, step S703 is performed.

Step S703: Detect whether a time is shorter than 18 seconds.

Whether a third event resource that is in the temporary state and that is generated by executing the first event by the first account is obtained within a first predetermined time segment is determined. The first predetermined time segment is 18 seconds. If it is detected that the time is longer than or equal to 18 seconds, step S704 is performed, and if it is detected that the time is shorter 18 seconds, step S705 is performed.

Step S704: Clear up a temporary soul.

If it is determined that the third event resource that is in the temporary state and that is generated by executing the first event by the first account is not obtained within the first predetermined time segment, that is, if it is detected that the time is longer than or equal to 18 seconds, the first event resource in the temporary state is deleted, that is, a temporary soul is cleared up, and the event resources in the normal state are reduced at a first predetermined speed.

Step S705: Detect whether there is a temporary soul currently.

If it is determined that the third event resource is obtained within the first predetermined time segment, that is, if it is detected that the time is shorter than 18 seconds, it is detected whether there is a temporary soul currently. If it is detected that there is no temporary soul currently, step S706 is performed, and if it is detected that there is a temporary soul currently, step S707 is performed.

Step S706: Reset a soul value, where n=1.

Step S707: Obtain a temporary soul 2^(n-1).

Step S708: Convert an original temporary soul into a formal soul.

After the temporary soul 2^(n-1) is obtained, the first event resource in the temporary state is converted into the first event resource in the normal state, the first event resource is added to the event resources that are in the normal state and that have been obtained, the original temporary soul is converted in to a formal soul, and step S701 is performed.

In this embodiment, a concept of continuous soul absorption is introduced for creating "delighted-depressed" moods during soul absorption and creating "stressed-relaxed" moods during a large cycle of soul absorption. Therefore, a set of concepts of continuous soul absorption are designed herein to create the moods. For each time of soul absorption, a soul value obtained by a player is a temporary soul value. After triggering continuous soul absorption, the temporary soul is converted in to a current soul. The temporary soul bursts when continuous soul absorption cannot be triggered, and the current soul is continuously lost if continuous soul absorption cannot be performed. During a losing process, if soul absorption can succeed, the losing is stopped, and a new temporary soul is added to a soul slot. To enhance feedings during continuous soul absorption, during design, an award of continuous soul absorption is particularly increased, continuous soul absorption triggers that a temporary soul value obtained during a next time of soul absorption is notably higher than that of current soul absorption, and the temporary soul value is processed as a current soul value when a character performs an active burst, so that a technical effect of updating a game attribute according to an event resource is produced.

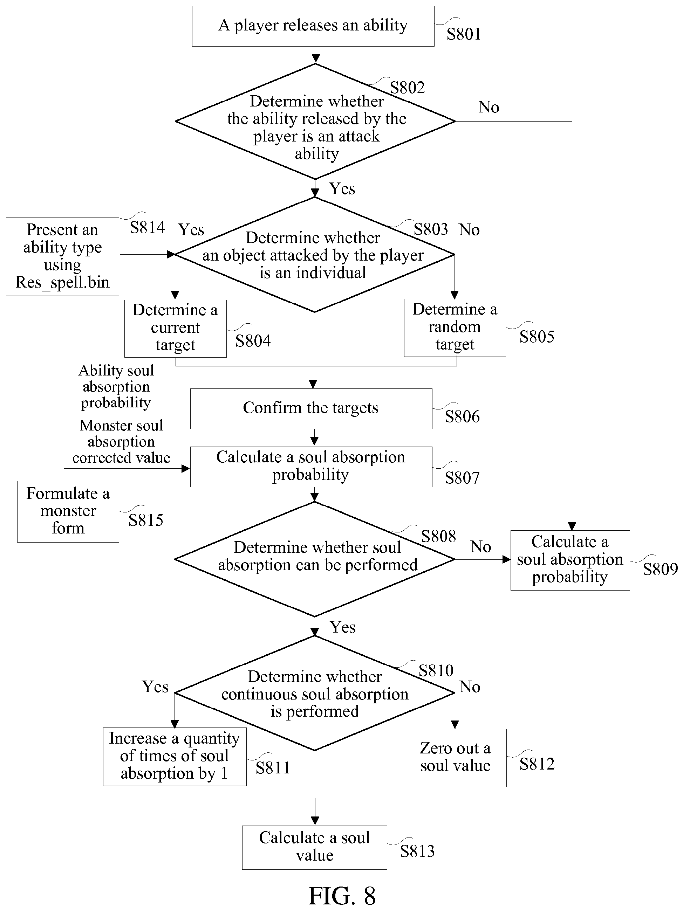

FIG. 8 is a flowchart of a method for calculating an event resource according to an embodiment of the present invention. As shown in FIG. 8, the method for calculating an event resource includes the following steps.

Step S801: A player releases an ability.

Step S802: Determine whether the ability released by the player is an attack ability.

If it is determined that the ability released by the player is not an attack ability, step S809 is performed, and if it is determined that the ability released by the player is an attack ability, step S803 is performed.

Step S803: Determine whether an object attacked by the player is an individual.

If it is determined that the object attacked by the player is an individual, step S804 is performed, and if it is determined that the object attacked by the player is not an individual, step S805 is performed.

Step S804: Determine a current target.

If it is determined that the object attacked by the player is an individual, the individual is a current target.

Step S805: Determine a random target.

If it is determined that the object attacked by the player is not an individual, that is, it is determined that the object attacked by the player is a group, a random target is determined from the group.

Step S806: Confirm the targets.

After the current target and the random target are determined, the targets are confirmed.

Step S807: Calculate a soul absorption probability.

After the targets are confirmed, a soul absorption probability is calculated.

Step S808: Determine whether soul absorption can be performed.

A soul absorption probability is calculated to determine whether soul absorption can be performed. If it is determined that soul absorption cannot be performed, step S809 is performed, and if it is determined that soul absorption can be performed, step S810 is performed.

Step S809: Calculate a soul absorption probability.

If it is determined that soul absorption cannot be performed, a soul absorption probability is calculated.

Step S810: Determine whether continuous soul absorption is performed.

If it is determined that soul absorption can be performed, whether continuous soul absorption is performed is determined. If it is determined that continuous soul absorption is performed, step S811 is performed, and if it is determined that continuous soul absorption is not performed, step S812 is performed.

Step S811: Increase a quantity of times of soul absorption by 1.

If it is determined that continuous soul absorption is performed, a quantity of times of soul absorption is increased by 1.

Step S812: Zero out a soul value.

If it is determined that continuous soul absorption is not performed, a soul value is zeroed out.

Step S813: Calculate a soul value.

After a quantity of times of soul absorption is increased by 1 or a soul value is zeroed out, a soul value is calculated.

Step S814: Use An ability type in Res_spell.bin.

Res_spell.bin is a binary file and stores an ID of a file index, an ability type, and parameters such as an ability soul absorption probability and a monster soul absorption corrected value.

Step S815: Use a monster form.

An ability type can be presented by using a monster form used for storing an ability soul absorption probability and a monster soul absorption corrected value in a Res_spell.bin form.

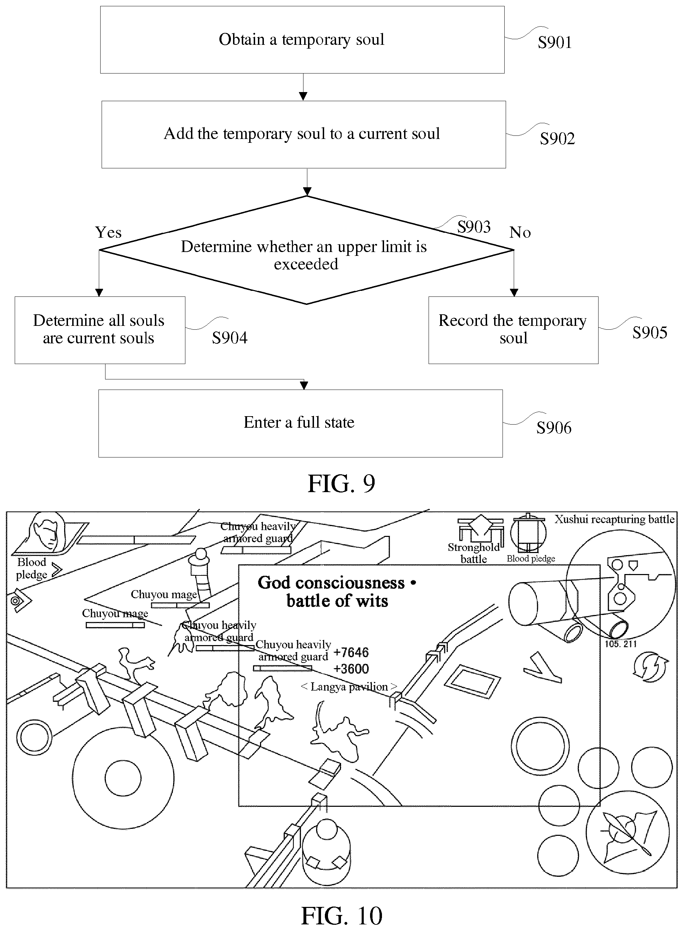

FIG. 9 is a flowchart of another method for updating a virtual application attribute according to an embodiment of the present invention. As shown in FIG. 9, the method for updating a virtual application attribute includes the following steps.

Step S901: Obtain a temporary soul.

Step S902: Add the temporary soul to a current soul.

Step S903: Determine whether an upper limit is exceeded.

After the temporary soul is added to the current soul, it is determined whether an upper limit is exceeded, that is, determining whether an accumulated soul value exceeds an upper limit. If it is determined that the upper limit is exceeded, step S904 is performed, and if it is determined that the upper limit is exceeded, step S905 is performed.

Step S904: Determine all souls are current souls.

Step S905: Record the temporary soul.

Step S906: Enter a full state.

After all souls are a current soul, a full state is achieved.

For example, in the foregoing steps of this embodiment, a soul slot in a burst system of a mobile phone RPG game is used for accumulating fighting souls such as a temporary soul and a current soul and is a brand new recording slot.

It is expected that a player can accumulate a full soul after continuously fight for approximately four minutes in field and underground palace environments.

According to that a proportion of a monster seeking time to a fighting time in an underground palace environment is approximately 1:2, in four minutes, a quantity of rounds of effective fighting of a player is 4*60*2/3/1.2=160/1.2=144 rounds (1 round per 1.2 seconds). In terms of soul value calculation, it is expected that a character reaches a full state after continuously absorb souls for 15 times, that is, a total soul value is 4180, and a soul absorption probability is 1/15≈6.67%. A monster seeking time of 3 rounds, a killing time of 9 rounds, and an average soul issuance probability are calculated. Herein, it is expected that the player successfully absorbs souls twice within the 15 rounds, that is, consecutive rounds, and a time is 18 seconds. According to a continuous soul absorption value, by rounding down in the thousand's place, it is expected that a storage upper limit of a soul slot is 4000. Both a temporary soul and a current soul are recorded in the soul slot. A temporary soul and a current soul requirement are separately recorded. When a sum of an obtained new temporary soul and an existing current soul is greater than equal to the upper limit of the soul slot, all the souls in the soul slot are converted into the current values, and a full state is entered.

The temporary soul and the current soul behave differently: extra accumulation of a fighting soul is set to be not allowed, and a choice of a character should be performing a burst as soon as possible in a full state or if it is expected that continuous soul absorption cannot be performed, so that a fighting soul system has a loss state. According to a speed at which the character accumulates souls, it is specified that if continuous soul absorption cannot be performed within 15 rounds, that is, continuous soul absorption cannot be performed within 18 seconds, a loss state is entered (that is, after a temporary soul bursts, if continuous soul absorption cannot be performed, a loss state is entered). After the soul slot is full through soul absorption, a two times award preparation time is granted. That is, if a burst ability is not released within 36 seconds after a full state is entered, a loss state is entered. In the full state, soul absorption cannot prolong a preparation time. If a loss speed is located at a half of time consumed during a burst period, after a full soul slot is completely lost within 32 seconds, a fighting soul value of 125 points is lost per second after loss is started. If continuous loss is interrupted by a next time of soul absorption, when soul absorption is successfully performed in the loss process, current loss is stopped, and entry to a next round of loss is waited for. After a character accumulates a fighting soul of 4000 points, that is, it is regarded that a full state is entered, a current soul and a temporary soul are no longer distinguished. There is a special fine art picture performance in a full state. In the full state, a time for automatically entering loss is prolonged because of a full award.

A burst is set as follows: a burst is a special fighting state awarded to a character after the character accumulates a specific fighting soul, and in this state, a fighting capability of the character is greatly improved, to create a sufficient refreshing feeling. The character needs to click a burst ability on a UI panel to enter a burst state. The character can burst when accumulation of a soul slot thereof exceeds 1000 (that is, 1/4 of a total soul slot, and only a stage of slot is full). When a current soul value of the character is not sufficient to burst or cannot burst because of limitation of a special scenario, an icon of the burst ability is displayed in gray. When the character enters the full state, the icon of the burst ability is displayed specially, and if the burst ability is not used within 36 seconds after the character enters the full state, the loss state is entered, and the character no longer performs soul absorption during the burst period. When it is expected the player performs a burst in the full state, the burst state can last for 32 rounds (set according to a standard PVP battle time), that is, during the burst, a fighting soul value 4000/32/1.2=104.1667, which is rounded to 100 points, is consumed per second. When the remaining fighting soul value of the character is cleaned up, the burst state is exited.

Basic effects of the burst are as follows:

A movement speed of the character is improved by 100% (the speed is not used together with riding, and is not used together with another acceleration ability), CDs of all abilities are converted into burst period CDs, and a common CD is converted a burst period common CD (when a specific ability is in a CD, a remaining CD time is proportionally calculated by comparing a previous CD and a next CD).

After the burst, a character life is added, and dying-state protection is performed (protecting a character while the character is dying) (the added life can be implemented by means of a buff, and the dying-state protection relates to a new program function). Effects of all abilities are converted into burst period effects, single line times of all abilities are converted into burst period single line times, and action special effects are correspondingly accelerated. During the burst period, if an attack ability is successfully released every three seconds, combo points can be accumulated, and can be configured in a form. If a combo does not succeed within three seconds, the combo points are reduced to 0. All attack abilities are corrected by values of combo points. A specific formula is: actual damage=calculated damage of ability×(1+combo points/10), and special processing is performed on the combo points on the UI. After the burst ends, soul absorption is performed again, where a soul value is accumulated again starting from 0.

Finally, based on the foregoing "burst system of a mobile phone RPG game", more abundant and interesting mobile phone RPG ability fighting plays can be implemented on a mobile phone platform.

In a burst system in a game, an energy slot for a soul is technically set for each player, and the energy slot is divided into 4 stages in total. After a first stage of the energy slot is full, a release can be performed, and the respective stages correspond to different effects. If a soul value is higher, a corresponding release lasts for a longer time, and a buff effect is better.

If the energy slot is not increased within a period of time, the energy slot automatically falls until it is cleared up. During a falling process, if a release of an ability causes an increase of the soul value, the fall is stopped, and countdown of a next fall is reset.

Because a soul value is an effect after an ability is successfully released, a change effect of the soul value is triggered by using am ability message. That is, the ability is successfully released, a server delivers a soul value increase message, and the energy slot is playing a change animation.

The server implements burst logic by using a state machine, and there are six states in total as follows:

INACTIVE: In this state, burst-related logic would not occur on a game character.

NORMAL: In the state where a soul value is 0, if a soul absorption message is received, a soul absorption state is entered immediately, and a soul value is increased.

COMBO: After this state is entered, a timer is added, and if no soul absorption message is received when the timer expires, a loss state is entered; otherwise, a soul absorption message is received, a corresponding soul value is increased, and a timeout of the timer is reset. If the soul value is increased to a maximum of a fourth stage, a full state is entered. After a burst request message is received, whether a current soul value can trigger a burst and a corresponding stage are checked, and a corresponding burst state is entered.

FULL: In this state, except for that the soul value is not increased, other logic is the same as that in the combo state.

BURST: After this state is entered, a stage is determined according to a soul value when this state is entered, corresponding buffs are added, and the buffs would produce various buff effects as planned. Meanwhile, a timeout timer is added, an expiration time is obtained by calculating a current soul value and a soul value loss speed, and when the time expires, the soul value is zeroed out and the buffs are cleared up at the same time, and the normal state is entered.

LOSS: When this state is entered, an expiration time is also obtained by calculation according to a current soul value and a soul value loss speed, and a timer is added. If a soul absorption message is received, the soul absorption state is entered. In this state, a burst request can also be received. A current soul value in the loss state would not be actively reduced by the server. Instead, a soul value at a specific moment is calculated according to a time and a loss speed. In this way, many unnecessary calculations can be omitted.

The state machine uses a message driving working manner, and sets callbacks of an entrance and an exit for each state. There are 10 types of messages in total: ABSORB, COMBO_AB_ACC, BURST, COMBO, RESET, CHK_ABSORB, CHK_ACC_CD, CHK_COMBO, ACTIVE, INACTIVE, and FINISH_COMBO. An external system sends the 10 types of message to a burst state machine. The burst state machine calls a corresponding message processing function according to a current state and provides feedback, so that a game attribute is updated, thereby producing a technical effect of updating a game attribute according to an event resource, and further resolving a technical problem that a game attribute cannot be updated according to an event resource in the related technology.

Application environments of the embodiments of the present invention may include, but be not limited to, application environments in the foregoing embodiments. Details are not described again in this embodiment. This embodiment of the present invention provides an optional specific application for implementing the foregoing method for updating a virtual application attribute.

FIG. 10 is a schematic diagram of updating another virtual application attribute according to an embodiment of the present invention. As shown FIG. 10, to further improve a refreshing feeling of a mobile phone RPG game fight, a burst system based on a mobile terminal RPG is added. Each player is provided with a soul slot for accumulating a quantity of uses of a player ability. After the soul slot of the player is filled up by accumulation, the soul slot is switched into a button, and meanwhile, the button flashes intensively, for example, the button on the lower right corner of FIG. 10, to prompt the player that the button can be used currently. After the player actively triggers the soul slot, an ultimate burst effect of the game is triggered. For the player, the ultimate burst system greatly improves a movement speed and an attack force within a short time, greatly reduces a cooldown, quickly restores a health value and a magic value, and provides an extremely gorgeous full-screen dynamic lighting effect. The player is really helped to obtain an extremely refreshing release of fighting experience at intervals during the fighting. Such rhythmic QTE burst experience greatly reduces a boring degree of a PRG player when the player fights frequently. A game attribute is updated, thereby producing a technical effect of updating a game attribute according to an event resource, and further resolving a technical problem that a game attribute cannot be updated according to an event resource in the related technology.

It should be noted that, for ease of description, the foregoing method embodiments are described as a series of action combinations. However, a person skilled in the art should understand that the present disclosure is not limited to the described sequence of the actions, because some steps may be performed in another sequence or performed at the same time according to the present disclosure. In addition, a person skilled in the art should also know that all the embodiments described in this specification are preferred embodiments, and the related actions and modules are not necessarily required in the present disclosure.

Through the descriptions of the preceding embodiments, a person skilled in the art may understand that the methods according to the foregoing embodiments may be implemented by hardware only or by software and a necessary universal hardware platform. However, in most cases, using software and a necessary universal hardware platform are preferred. Based on such an understanding, the technical solutions of the embodiments of the present invention essentially, or the part contributing to the related art may be implemented in a form of a software product. The computer software product is stored in a storage medium (such as a ROM/RAM, a magnetic disk, or an optical disc) and includes several instructions for instructing a terminal device (which may be a mobile phone, a computer, a server, a network device, or the like) to perform the methods described in the embodiments of the present invention.

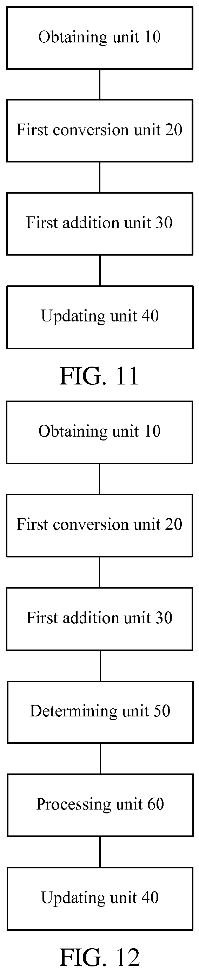

According to the embodiments of the present invention, an apparatus for updating a virtual application attribute, configured to implement the foregoing method for updating a virtual application attribute, is further provided. FIG. 11 is a schematic diagram of an apparatus for updating a virtual application attribute according to an embodiment of the present invention. As shown in FIG. 11, the apparatus for updating a virtual application attribute may include an obtaining unit 10, a first conversion unit 20, a first addition unit 30, and an updating unit 40.

The obtaining unit 10 is configured to in a running process of a virtual application client, obtain a first event resource that is in a temporary state and that is generated by executing a first event by a first account of the virtual application client.

The first conversion unit 20 is configured to convert a second event resource that is in the temporary state and that is obtained before the first event resource into the second event resource in a normal state.

The first addition unit 30 is configured to add the second event resource to an event resource that is in the normal state and that has been obtained.

The updating unit 40 is configured to when a predetermined operation performed on the event resource in the normal state is detected, update a virtual application attribute of the first account in the virtual application client.

It should be noted that the obtaining unit 10, the first conversion unit 20, the first addition unit 30, and the updating unit 40 may run in a terminal as a part of the apparatus. Functions implemented by the foregoing modules may be implemented by a processor in the terminal. The terminal may be a terminal device such as a smartphone (such as an Android mobile phone or an iOS mobile phone), a tablet computer, a palmtop computer, a mobile Internet device (MID), or a PAD.

It should be noted that the obtaining unit 10 in this embodiment can be configured to perform step S202 in Embodiment 1 of the present invention, the first conversion unit 20 in this embodiment can be configured to perform step S204 in Embodiment 1 of the present invention, the first addition unit 30 in this embodiment can be configured to perform step S206 in Embodiment 1 of the present invention, and the updating unit 40 in this embodiment can be configured to perform step S208 in Embodiment 1 of the present invention.

FIG. 12 is a schematic diagram of another apparatus for updating a virtual application attribute according to an embodiment of the present invention. As shown in FIG. 12, the apparatus for updating a virtual application attribute may include an obtaining unit 10, a first conversion unit 20, a first addition unit 30, and an updating unit 40. The apparatus for updating a virtual application attribute further includes: a determining unit 50 and a processing unit 60.

It should be noted that functions of the obtaining unit 10, the first conversion unit 20, the first addition unit 30, and the updating unit 40 in this embodiment are the same as those in the apparatus for updating a virtual application attribute in the embodiment shown in FIG. 11. Details are not described herein again.

The determining unit 50 is configured to after the second event resource is added to an event resource that is in the normal state and that has been obtained, determine whether a third event resource that is in the temporary state and that is generated by executing the first event by the first account is obtained within a first predetermined time segment.

The processing unit 60 is configured to if it is determined that the third event resource is not obtained within the first predetermined time segment, delete the first event resource in the temporary state, and reduce the event resources in the normal state at a first predetermined speed.

It should be noted that the determining unit 50 and the processing unit 60 may run in a terminal as a part of the apparatus. Functions implemented by the foregoing modules may be implemented by a processor in the terminal. The terminal may be a terminal device such as a smartphone (such as an Android mobile phone or an iOS mobile phone), a tablet computer, a palmtop computer, a mobile Internet device (MID), or a PAD.

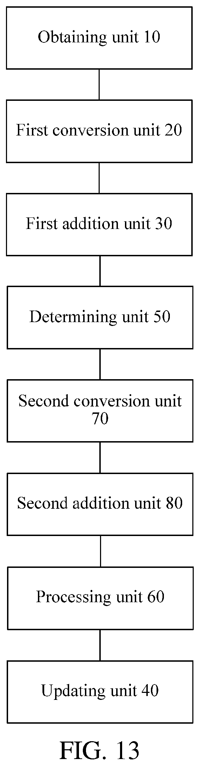

FIG. 13 is a schematic diagram of another apparatus for updating a virtual application attribute according to an embodiment of the present invention. As shown in FIG. 13, the apparatus for updating a virtual application attribute may include an obtaining unit 10, a first conversion unit 20, a first addition unit 30, an updating unit 40, a determining unit 50, and a processing unit 60. The apparatus for updating a virtual application attribute may further include: a second conversion unit 70 and a second addition unit 80.

It should be noted that functions of the obtaining unit 10, the first conversion unit 20, the first addition unit 30, the updating unit 40, the determining unit 50, and the processing unit 60 in this embodiment are the same as those in the apparatus for updating a virtual application attribute in the embodiment shown in FIG. 12. Details are not described herein again.

The second conversion unit 70 is configured to: after whether a third event resource that is in the temporary state and that is generated by executing the first event by the first account is obtained within a first predetermined time segment is determined, if it is determined that the third event resource is obtained within the first predetermined time segment, convert the first event resource in the temporary state into the first event resource in the normal state.

The second addition unit 80 is configured to add the first event resource to the event resources that are in the normal state and that have been obtained.

It should be noted that the second conversion unit 70 and the second addition unit 80 may run in a terminal as a part of the apparatus. Functions implemented by the foregoing modules may be implemented by a processor in the terminal. The terminal may be a terminal device such as a smartphone (such as an Android mobile phone or an iOS mobile phone), a tablet computer, a palmtop computer, a mobile Internet device (MID), or a PAD.

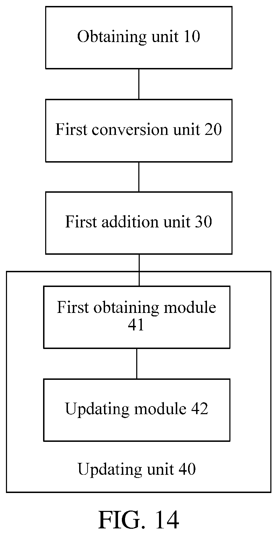

FIG. 14 is a schematic diagram of another apparatus for updating a virtual application attribute according to an embodiment of the present invention. As shown in FIG. 14, the apparatus for updating a virtual application attribute may include an obtaining unit 10, a first conversion unit 20, a first addition unit 30, and an updating unit 40. The updating unit 40 includes: a first obtaining module 41 and an updating module 42.

It should be noted that functions of the obtaining unit 10, the first conversion unit 20, the first addition unit 30, and the updating unit 40 in this embodiment are the same as those in the apparatus for updating a virtual application attribute in the embodiment shown in FIG. 11. Details are not described herein again.

The first obtaining module 41 is configured to obtain a resource range within which the event resource falls.

The updating module 42 is configured to perform an update corresponding to the resource range on the virtual application attribute of the first account in the virtual application client.

It should be noted that the first obtaining module 41 and the updating module 42 may run in a terminal as a part of the apparatus. Functions implemented by the foregoing modules may be implemented by a processor in the terminal. The terminal may be a terminal device such as a smartphone (such as an Android mobile phone or an iOS mobile phone), a tablet computer, a palmtop computer, a mobile Internet device (MID), or a PAD.

Optionally, the updating module 42 is configured to if the resource range is larger, increase or reduce the virtual application attribute by a larger magnitude.

Optionally, the updating unit 40 is configured to perform at least one of the following methods: increasing a movement speed of the first account in the virtual application client; increasing an attack force of the first account in the virtual application client; increasing a health value of the first account in the virtual application client; increasing a magic value of the first account in the virtual application client; and reducing a cooldown of the first account in the virtual application client.

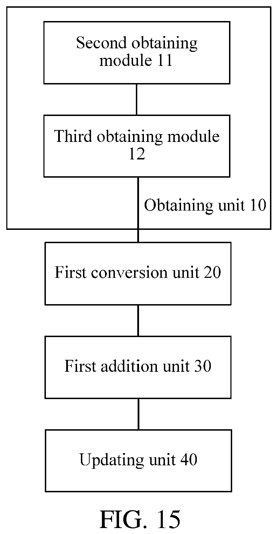

FIG. 15 is a schematic diagram of another apparatus for updating a virtual application attribute according to an embodiment of the present invention. As shown in FIG. 15, the apparatus for updating a virtual application attribute at least includes an obtaining unit 10, a first conversion unit 20, a first addition unit 30, and an updating unit 40 where the obtaining unit 10 includes: a second obtaining module 11 and a third obtaining module 12.

It should be noted that functions of the obtaining unit 10, the first conversion unit 20, the first addition unit 30, and the updating unit 40 in this embodiment are the same as those in the apparatus for updating a virtual application attribute in the embodiment shown in FIG. 11. Details are not described herein again.

The second obtaining module 11 is configured to obtain a first attribute of an event operation performed in the first event and a second attribute of an operation object of the event operation.

The third obtaining module 12 is configured to obtain the first event resource corresponding to the first attribute and the second attribute.

It should be noted that the second obtaining module 11 and the third obtaining module 12 may run in a terminal as a part of the apparatus. Functions implemented by the foregoing modules may be implemented by a processor in the terminal. The terminal may be a terminal device such as a smartphone (such as an Android mobile phone or an iOS mobile phone), a tablet computer, a palmtop computer, a mobile Internet device (MID), or a PAD.

Optionally, the third obtaining module 12 is configured to obtain the first event resource corresponding to the first attribute and the second attribute at a predetermined probability.

Optionally, the apparatus for updating a virtual application attribute further includes a display unit, configured to after the second event resource is added to an event resource that is in the normal state and that has been obtained, display a prompt identifier on an operation interface of the virtual application client, where the prompt identifier is used for prompting to perform the predetermined operation on the event resource in the normal state.

In the foregoing embodiments, by obtaining, by the obtaining unit 10 in a running process of a virtual application client, a first event resource that is in a temporary state and that is generated by executing a first event by a first account of the virtual application client, converting, by the first conversion unit 20, a second event resource that is in the temporary state and that is obtained before the first event resource into the second event resource in a normal state, adding, by the first addition unit 30, the second event resource to an event resource that is in the normal state and that has been obtained, and when a predetermined operation performed on the event resource in the normal state is detected, updating, by the updating unit 40, a virtual application attribute of the first account in the virtual application client, the virtual application attribute is updated, thereby producing a technical effect of updating a virtual application attribute according to an event resource and resolving a technical problem that a game attribute cannot be updated according to an event resource in the related technology.

It should be noted herein that implemented examples and application scenarios of the foregoing units and modules are the same those of the corresponding steps, but are not limited to the content disclosed by Embodiment 1. It should be noted that the foregoing modules can run as a part of the apparatus in a hardware environment as shown in FIG. 1, and can be implemented through software or hardware.

It should be noted herein that implemented examples and application scenarios of the foregoing modules are the same those of the corresponding steps, but are not limited to the content disclosed by Embodiment 1. It should be noted that the foregoing modules can run as a part of the apparatus in a hardware environment as shown in FIG. 1, and can be implemented through software or hardware. The hardware environment includes a network environment.

Each functional module provided in the embodiments of this application can run in a mobile terminal, a computer terminal, or a similar computing apparatus, or can be stored as a part of a storage medium.

Hence, the embodiments of the present invention may provide a terminal, and the terminal may be any computer terminal device in a computer terminal group. Optionally, in this embodiment, the foregoing terminal may alternatively be replaced with a terminal device such as a mobile terminal.

Optionally, in this embodiment, the foregoing terminal may be located in at least one of a plurality of network devices in a computer network.

According to the embodiments of the present invention, a terminal, configured to implement the foregoing method for updating a virtual application attribute, is further provided. The terminal may be a computer terminal or any computer terminal device in a computer terminal group. Optionally, in this embodiment, the foregoing computer terminal may alternatively be replaced with a terminal device such as a mobile terminal.

Optionally, in this embodiment, the foregoing computer terminal may be located in at least one of a plurality of network devices in a computer network.

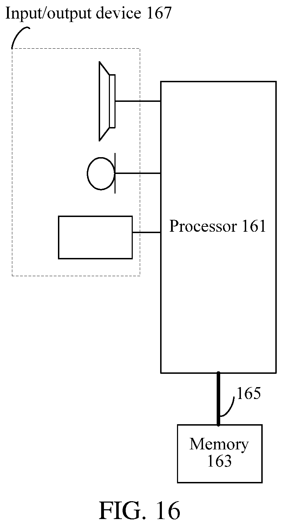

FIG. 16 is a structural block diagram of a terminal according to an embodiment of the present invention. As shown in FIG. 16, the terminal may include: one or more (only one is shown in the figure) processors 161, a memory 163, and a transmission apparatus 165. As shown in FIG. 16, the terminal may further include an input/output device 167.

The memory 163 may be configured to store a software program and a module, for example, a program instruction/module corresponding to the method and apparatus for updating a virtual application attribute in the embodiments of the present invention, and the processor 161 performs various functional applications and data processing by running a software program and a module stored in the memory 163, that is, implementing the foregoing method for updating a virtual application attribute. The memory 163 may include a high-speed random memory, and may alternatively include a nonvolatile memory such as one or more magnetic storage devices, a flash memory, or another nonvolatile solid-state memory. In some instances, the memory 163 may further include memories remotely disposed relative to the processor 161, and these remote memories may be connected to the terminal through a network. Instances of the network include, but are not limited to, the Internet, an intranet, a local area network, a mobile communications network, and a combination thereof.

The foregoing transmission apparatus 165 is configured to receive or send data through a network or may be configured to data transmission between the processor and the memory. Specific instances of the foregoing network may include a wired network and a wireless network. In an instance, the transmission apparatus 165 includes a network interface controller (NIC) that may be connected to another network device and a router by using a network cable, thereby communicating with the Internet or a local area network. In an instance, the transmission apparatus 165 is a radio frequency (RF) module that is configured to communicate with the Internet in a wireless manner.

Specifically, the memory 163 is configured to store an application program.

The processor 161 may call the application program stored in the memory 163 by using the transmission apparatus 165, to execute program code of steps of the method in each optional or preferred embodiment in the foregoing method embodiments, including:
obtaining, in a running process of a virtual application client, a first event resource that is in a temporary state and that is generated by executing a first event by a first account of the virtual application client;
converting a second event resource that is in the temporary state and that is obtained before the first event resource into the second event resource in a normal state;
adding the second event resource to an event resource that is in the normal state and that has been obtained;
when a predetermined operation performed on the event resource in the normal state is detected, updating a virtual application attribute of the first account in the virtual application client.

The processor 161 is further configured to perform the following steps: after the second event resource is added to an event resource that is in the normal state and that has been obtained, determining whether a third event resource that is in the temporary state and that is generated by executing the first event by the first account is obtained within a first predetermined time segment; and if it is determined that the third event resource is not obtained within the first predetermined time segment, deleting the first event resource in the temporary state, and reducing the event resources in the normal state at a first predetermined speed.

The processor 161 is further configured to perform the following steps: after whether a third event resource that is in the temporary state and that is generated by executing the first event by the first account is obtained within a first predetermined time segment is determined, if it is determined that the third event resource is obtained within the first predetermined time segment, converting the first event resource in the temporary state into the first event resource in the normal state; and adding the first event resource to the event resources that are in the normal state and that have been obtained.

The processor 161 is further configured to perform the following steps: the updating a virtual application attribute of the first account in the virtual application client includes: obtaining a resource range within which the event resource falls; and performing an update corresponding to the resource range on the virtual application attribute of the first account in the virtual application client.

The processor 161 is further configured to perform the following step: if the resource range is larger, increasing or reducing the virtual application attribute by a larger magnitude.

The processor 161 is configured to update a virtual application attribute of the first account in the virtual application client, including at least one of the following: increasing a movement speed of the first account in the virtual application client; increasing an attack force of the first account in the virtual application client; increasing a health value of the first account in the virtual application client; increasing a magic value of the first account in the virtual application client; and reducing a cooldown of the first account in the virtual application client.

The processor 161 is further configured to perform the following steps: obtaining a first attribute of an event operation performed in the first event and a second attribute of an operation object of the event operation; and obtaining the first event resource corresponding to the first attribute and the second attribute.

The processor 161 is further configured to perform the following step: obtaining the first event resource corresponding to the first attribute and the second attribute at a predetermined probability.

The processor 161 is further configured to perform the following step: after the second event resource is added to an event resource that is in the normal state and that has been obtained, displaying a prompt identifier on an operation interface of the virtual application client, where the prompt identifier is used for prompting to perform the predetermined operation on the event resource in the normal state.

In the embodiments of the present invention, by obtaining, in a running process of a virtual application client, a first event resource that is in a temporary state and that is generated by executing a first event by a first account of the virtual application client, converting a second event resource that is in the temporary state and that is obtained before the first event resource into the second event resource in a normal state, adding the second event resource to an event resource that is in the normal state and that has been obtained, and when a predetermined operation performed on the event resource in the normal state is detected, updating a virtual application attribute of the first account in the virtual application client, the virtual application attribute is updated, thereby producing a technical effect of updating a virtual application attribute according to an event resource and resolving a technical problem that a game attribute cannot be updated according to an event resource in the related technology.

Optionally, for a specific example in this embodiment, refer to the examples described in the foregoing embodiments, and details are not described herein again in this embodiment.

A person of ordinary skill in the art may understand that, the structure shown in FIG. 16 is only illustrative. The terminal may be a terminal device such as a smartphone (such as an Android mobile phone or an iOS mobile phone), a tablet computer, a palmtop computer, a mobile Internet device (MID), or a PAD. FIG. 16 does not limit the structure of the foregoing electronic apparatus. For example, the terminal may alternatively include more or less components (such as a network interface and a display apparatus) than those shown in FIG. 16, or has a configuration different from that shown in FIG. 16.

A person of ordinary skill in the art may understand that all or a part of the steps of the methods of the foregoing embodiments may be implemented by a program instructing relevant hardware of the terminal device. The program may be stored in a computer readable storage medium. The storage medium may be a flash disk, a read-only memory (ROM), a random access memory (RAM), a magnetic disk, or an optical disc.

This embodiment of this application further provides a storage medium. Optionally, in this embodiment, the foregoing storage medium may store program code, where the program code is used for performing steps in the method for updating a virtual application attribute provided in the foregoing method embodiments.

Optionally, in this embodiment, the foregoing storage medium may be located in any computer terminal in a computer terminal group in a network computer or any mobile terminal in a mobile terminal group.

Optionally, in this embodiment, the storage medium is set to store program code used for performing the following steps:
obtaining, in a running process of a virtual application client, a first event resource that is in a temporary state and that is generated by executing a first event by a first account of the virtual application client;
converting a second event resource that is in the temporary state and that is obtained before the first event resource into the second event resource in a normal state;
adding the second event resource to an event resource that is in the normal state and that has been obtained;
when a predetermined operation performed on the event resource in the normal state is detected, updating a virtual application attribute of the first account in the virtual application client.

Optionally, the storage medium is further configured to store program code used for performing the following steps: after the second event resource is added to an event resource that is in the normal state and that has been obtained, determining whether a third event resource that is in the temporary state and that is generated by executing the first event by the first account is obtained within a first predetermined time segment; and if it is determined that the third event resource is not obtained within the first predetermined time segment, deleting the first event resource in the temporary state, and reducing the event resources in the normal state at a first predetermined speed.

Optionally, the storage medium is further configured to store program code used for performing the following steps: after whether a third event resource that is in the temporary state and that is generated by executing the first event by the first account is obtained within a first predetermined time segment is determined, if it is determined that the third event resource is obtained within the first predetermined time segment, converting the first event resource in the temporary state into the first event resource in the normal state; and adding the first event resource to the event resources that are in the normal state and that have been obtained.

Optionally, the storage medium is further configured to store program code used for performing the following steps: the updating a virtual application attribute of the first account in the virtual application client includes: obtaining a resource range within which the event resource falls; and performing an update corresponding to the resource range on the virtual application attribute of the first account in the virtual application client.

Optionally, the storage medium is further configured to store program code used for performing the following step: if the resource range is larger, increasing or reducing the virtual application attribute by a larger magnitude.

Optionally, the storage medium is further configured to store program code used for updating a virtual application attribute of the first account in the virtual application client, including at least one of the following: increasing a movement speed of the first account in the virtual application client; increasing an attack force of the first account in the virtual application client; increasing a health value of the first account in the virtual application client; increasing a magic value of the first account in the virtual application client; and reducing a cooldown of the first account in the virtual application client.

Optionally, the storage medium is further configured to store program code used for performing the following steps: obtaining a first attribute of an event operation performed in the first event and a second attribute of an operation object of the event operation; and obtaining the first event resource corresponding to the first attribute and the second attribute.

Optionally, the storage medium is further configured to store program code used for performing the following step: obtaining the first event resource corresponding to the first attribute and the second attribute at a predetermined probability.

Optionally, the storage medium is further configured to store program code used for performing the following step: after the second event resource is added to an event resource that is in the normal state and that has been obtained, displaying a prompt identifier on an operation interface of the virtual application client, where the prompt identifier is used for prompting to perform the predetermined operation on the event resource in the normal state.

Optionally, for a specific example in this embodiment, refer to the examples described in the foregoing embodiments, and details are not described herein again in this embodiment.

Optionally, in this embodiment, the foregoing storage medium may include but is not limited to: any medium that can store program code, such as a USB flash drive, a read-only memory (ROM), a random access memory (RAM), a removable hard disk, a magnetic disk, or an optical disc.

The method and apparatus for updating a virtual application attribute and the storage medium according to the present disclosure are described above using examples with reference to the accompanying drawings. However, a person skilled in the art should understand that various improvements can be made on the method and apparatus for updating a virtual application attribute and the storage medium provided in the present disclosure without departing from the content of the present disclosure. Therefore, the protection scope of the present disclosure should be determined on the content of the attached claims.

The sequence numbers of the preceding embodiments of the present invention are merely for description but do not indicate the preference of the embodiments.

When the integrated unit in the foregoing embodiment is implemented in a form of a software functional module and sold or used as an independent product, the integrated unit may be stored in the foregoing computer-readable storage medium. Based on such an understanding, the technical solutions of the embodiments of the present invention essentially, or the part contributing to the related art, or all or some of the technical solutions may be implemented in a form of a software product. The computer software product is stored in a storage medium and includes instructions for instructing one or more computer devices (which may be a personal computer, a server, a network device, or the like) to perform all or some of the steps of the methods described in the embodiments of the present invention.

In the foregoing embodiments of the present invention, descriptions of the embodiments have different emphases, and as for parts that are not described in detail in one embodiment, reference can be made to the relevant description of the other embodiments.

In the several embodiments provided in the present disclosure, it should be understood that the disclosed client may be implemented in other manners. The described apparatus embodiments are merely exemplary. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the units or modules may be implemented in electronic or other forms.

The units described as separate parts may or may not be physically separate, and the parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

### Industrial practicability

In the embodiments of the present invention, by obtaining a first event resource that is in a temporary state and that is generated by executing a first event by a first account of a virtual application client, converting a second event resource that is in the temporary state and that is obtained before the first event resource into the second event resource in a normal state, adding the
second event resource to an event resource that is in the normal state and that has been obtained, and when a predetermined operation performed on the event resource in the normal state is detected, updating a virtual application attribute of the first account in the virtual application client, the virtual application attribute is updated, thereby producing a technical effect of updating a virtual application attribute according to an event resource and resolving a technical problem that a game attribute cannot be updated according to an event resource in the related technology.

## Claims

1. A method for updating a virtual application attribute performed by a terminal (104) or a server (102), the method comprising:
obtaining, in a running process of a virtual application client, a first event resource that is in a temporary state and that is generated by executing a first event by a first account of the virtual application client (S202);
converting a second event resource that is in the temporary state and that is obtained before the first event resource into the second event resource in a normal state (S204), wherein
the event resource that is in the normal state is stored at a preset storage location, and
after the second event resource is converted into the second event resource in the normal state, the second event resource is added to the event resource that is in the normal state and that has been obtained, so as to continuously accumulate event resources that have been converted from the temporary state to the normal state;
adding the second event resource to an event resource that is in the normal state and that has been obtained (S206); and
when a predetermined operation performed on the event resource in the normal state is detected, updating a virtual application attribute of the first account in the virtual application client (S208), wherein
after the adding the second event resource to an event resource that is in the normal state and that has been obtained (S206), the method further comprises:
determining whether a third event resource that is in the temporary state and that is generated by executing the first event by the first account is obtained within a first predetermined time segment (S301); and
if it is determined that the third event resource is not obtained within the first predetermined time segment, deleting the first event resource in the temporary state, and reducing the event resources in the normal state at a first predetermined speed (S302) so as to gradually reduce event resources stored at the preset storage location.

2. The method according to claim 1, wherein after the determining whether a third event resource that is in the temporary state and that is generated by executing the first event by the first account is obtained within a first predetermined time segment (S301), the method further comprises:
if it is determined that the third event resource is obtained within the first predetermined time segment, converting the first event resource in the temporary state into the first event resource in the normal state (S401); and
adding the first event resource to the event resources that are in the normal state and that have been obtained (S402).

3. The method according to claim 1, wherein the updating a virtual application attribute of the first account in the virtual application client (S208) comprises:
obtaining a resource range within which the event resource falls (S501); and
performing an update corresponding to the resource range on the virtual application attribute of the first account in the virtual application client (S502).

4. The method according to claim 3, wherein the performing an update corresponding to the resource range on the virtual application attribute of the first account in the virtual application client (S502) comprises:
if the resource range is larger, increasing or reducing the virtual application attribute by a larger magnitude.

5. The method according to any one of claims 1 to 4, wherein the updating a virtual application attribute of the first account in the virtual application client (S208) comprises at least one of the following:
increasing a movement speed of the first account in the virtual application client;
increasing an attack force of the first account in the virtual application client;
increasing a health value of the first account in the virtual application client;
increasing a magic value of the first account in the virtual application client; and
reducing a cooldown of the first account in the virtual application client.

6. The method according to any one of claims 1 to 4, wherein the obtaining a first event resource that is in a temporary state and that is generated by executing a first event by a first account of the virtual application client (S202) comprises:
obtaining a first attribute of an event operation performed in the first event and a second attribute of an operation object of the event operation (S601); and
obtaining the first event resource corresponding to the first attribute and the second attribute (S602).

7. The method according to claim 6, wherein the obtaining the first event resource corresponding to the first attribute and the second attribute (S602) comprises:
obtaining the first event resource corresponding to the first attribute and the second attribute at a predetermined probability.

8. The method according to any one of claims 1 to 4, wherein after the adding the second event resource to an event resource that is in the normal state and that has been obtained (S206), the method further comprises:
displaying a prompt identifier on an operation interface of the virtual application client, wherein the prompt identifier is used for prompting to perform the predetermined operation on the event resource in the normal state.

9. An apparatus for updating a virtual application attribute, comprising:
an obtaining unit (10), configured to in a running process of a virtual application client, obtain a first event resource that is in a temporary state and that is generated by executing a first event by a first account of the virtual application client;
a first conversion unit (20), configured to convert a second event resource that is in the temporary state and that is obtained before the first event resource into the second event resource in a normal state, wherein the event resource that is in the normal state is stored at a preset storage location, and after the second event resource is converted into the second event resource in the normal state, the second event resource is added to the event resource that is in the normal state and that has been obtained, so as to continuously accumulate event resources that have been converted from the temporary state to the normal state;
a first addition unit (30), configured to add the second event resource to an event resource that is in the normal state and that has been obtained;
an updating unit (40), configured to when a predetermined operation performed on the event resource in the normal state is detected, update a virtual application attribute of the first account in the virtual application client;
a determining unit (50), configured to after the second event resource is added to an event resource that is in the normal state and that has been obtained, determine whether a third event resource that is in the temporary state and that is generated by executing the first event by the first account is obtained within a first predetermined time segment; and
a processing unit (60), configured to if it is determined that the third event resource is not obtained within the first predetermined time segment, delete the first event resource in the temporary state, and reduce the event resources in the normal state at a first predetermined speed so as to gradually reduce event resources stored at the preset storage location.

10. The apparatus according to claim 9, further comprising:
a second conversion unit (70), configured to after whether a third event resource that is in the temporary state and that is generated by executing the first event by the first account is obtained within a first predetermined time segment is determined, if it is determined that the third event resource is obtained within the first predetermined time segment, convert the first event resource in the temporary state into the first event resource in the normal state; and
a second addition unit (80), configured to add the first event resource to the event resources that are in the normal state and that have been obtained.

11. The apparatus according to claim 9, wherein the updating unit (40) comprises:
a first obtaining module (41), configured to obtain a resource range within which the event resource falls; and
an updating module (42), configured to perform an update corresponding to the resource range on the virtual application attribute of the first account in the virtual application client.

12. A terminal, configured to execute program code, the program code being used for executing steps in the method for updating a virtual application attribute according to any one of claims 1 to 8.

13. A storage medium, configured to store program code, the program code being used for executing steps in the method for updating a virtual application attribute according to any one of claims 1 to 8.

## Patentansprüche

1. Verfahren zum Aktualisieren eines Attributs einer virtuellen Anwendung, durchgeführt von einem Endgerät (104) oder einem Server (102), wobei das Verfahren umfasst:
Erhalten, in einem laufenden Prozess eines Clients einer virtuellen Anwendung, einer ersten Ereignisressource, die sich in einem temporären Zustand befindet und die durch Ausführen eines ersten Ereignisses durch ein erstes Konto des Clients der virtuellen Anwendung erzeugt wird (S202);
Umwandeln einer zweiten Ereignisressource, die sich in dem temporären Zustand befindet und die vor der ersten Ereignisressource erhalten wird, in die zweite Ereignisressource in einem Normalzustand (S204), wobei
die Ereignisressource in dem Normalzustand an einem voreingestellten Speicherort gespeichert wird, und
nachdem die zweite Ereignisressource in die zweite Ereignisressource in dem Normalzustand umgewandelt worden ist, die zweite Ereignisressource zu der Ereignisressource in dem Normalzustand, die erhalten worden ist, hinzugefügt wird, sodass Ereignisressourcen, die von dem temporären Zustand in den Normalzustand umgewandelt worden sind, fortlaufend akkumuliert werden;
Hinzufügen der zweiten Ereignisressource zu einer Ereignisressource, die sich in dem Normalzustand befindet und die erhalten worden ist (S206); und
wenn ein vorbestimmter Vorgang, der an der Ereignisressource in dem Normalzustand durchgeführt wird, detektiert wird, Aktualisieren eines Attributs der virtuellen Anwendung des ersten Kontos in dem Client der virtuellen Anwendung (S208), wobei
nach dem Hinzufügen der zweiten Ereignisressource zu einer Ereignisressource, die sich in dem Normalzustand befindet und die erhalten worden ist (S206), das Verfahren ferner umfasst:
Bestimmen, ob eine dritte Ereignisressource, die sich in dem temporären Zustand befindet und die durch Ausführen des ersten Ereignisses durch das erste Konto erzeugt wird, innerhalb eines ersten vorbestimmten Zeitsegments erhalten wird (S301); und
falls bestimmt wird, dass die dritte Ereignisressource nicht innerhalb des ersten vorbestimmten Zeitsegments erhalten wird, Löschen der ersten Ereignisressource in dem temporären Zustand und Verringern der Ereignisressourcen in dem Normalzustand mit einer ersten vorbestimmten Geschwindigkeit (S302), sodass an dem voreingestellten Speicherort gespeicherte Ereignisressourcen allmählich verringert werden.

2. Verfahren nach Anspruch 1, wobei das Verfahren nach dem Bestimmen, ob eine dritte Ereignisressource, die sich in dem temporären Zustand befindet und die durch Ausführen des ersten Ereignisses durch das erste Konto erzeugt wird, innerhalb eines ersten vorbestimmten Zeitsegments erhalten wird (S301), ferner umfasst:
falls bestimmt wird, dass die dritte Ereignisressource innerhalb des ersten vorbestimmten Zeitsegments erhalten wird, Umwandeln der ersten Ereignisressource in dem temporären Zustand in die erste Ereignisressource in dem Normalzustand (S401); und
Hinzufügen der ersten Ereignisressource zu den Ereignisressourcen, die sich in dem Normalzustand befinden und die erhalten worden sind (S402).

3. Verfahren nach Anspruch 1, wobei das Aktualisieren eines Attributs der virtuellen Anwendung des ersten Kontos in dem Client der virtuellen Anwendung (S208) umfasst:
Erhalten eines Ressourcenbereichs, in den die Ereignisressource fällt (S501); und
Durchführen einer dem Ressourcenbereich entsprechenden Aktualisierung an dem Attribut der virtuellen Anwendung des ersten Kontos in dem Client der virtuellen Anwendung (S502).

4. Verfahren nach Anspruch 3, wobei das Durchführen einer dem Ressourcenbereich entsprechenden Aktualisierung an dem Attribut der virtuellen Anwendung des ersten Kontos in dem Client der virtuellen Anwendung (S502) umfasst:
falls der Ressourcenbereich größer ist, Erhöhen oder Verringern des Attributs der virtuellen Anwendung um ein größeres Ausmaß.

5. Verfahren nach einem der Ansprüche 1 bis 4, wobei das Aktualisieren eines Attributs der virtuellen Anwendung des ersten Kontos in dem Client der virtuellen Anwendung (S208) mindestens eines des Folgenden umfasst:
Erhöhen einer Bewegungsgeschwindigkeit des ersten Kontos in dem Client der virtuellen Anwendung;
Erhöhen einer Angriffskraft des ersten Kontos in dem Client der virtuellen Anwendung;
Erhöhen eines Gesundheitswerts des ersten Kontos in dem Client der virtuellen Anwendung;
Erhöhen eines Magiewerts des ersten Kontos in dem Client der virtuellen Anwendung; und
Verringern einer Abklingzeit des ersten Kontos in dem Client der virtuellen Anwendung.

6. Verfahren nach einem der Ansprüche 1 bis 4, wobei das Erhalten einer ersten Ereignisressource, die sich in einem temporären Zustand befindet und die durch Ausführen eines ersten Ereignisses durch ein erstes Konto des Clients der virtuellen Anwendung erzeugt wird (S202), umfasst:
Erhalten eines ersten Attributs eines Ereignisvorgangs, der in dem ersten Ereignis durchgeführt wird, und eines zweiten Attributs eines Operationsobjekts des Ereignisvorgangs (S601); und
Erhalten der ersten Ereignisressource entsprechend dem ersten Attribut und dem zweiten Attribut (S602).

7. Verfahren nach Anspruch 6, wobei das Erhalten der ersten Ereignisressource entsprechend dem ersten Attribut und dem zweiten Attribut (S602) umfasst:
Erhalten der ersten Ereignisressource entsprechend dem ersten Attribut und dem zweiten Attribut mit einer vorbestimmten Wahrscheinlichkeit.

8. Verfahren nach einem der Ansprüche 1 bis 4, wobei das Verfahren nach dem Hinzufügen der zweiten Ereignisressource zu einer Ereignisressource, die sich in dem Normalzustand befindet und die erhalten worden ist (S206), ferner umfasst:
Anzeigen einer Aufforderungskennung auf einer Bedienoberfläche des Clients der virtuellen Anwendung, wobei die Aufforderungskennung zum Auffordern zum Durchführen des vorbestimmten Vorgangs an der Ereignisressource in dem Normalzustand verwendet wird.

9. Vorrichtung zum Aktualisieren eines Attributs einer virtuellen Anwendung, umfassend:
eine Erhaltungseinheit (10), die eingerichtet ist, in einem laufenden Prozess eines Clients einer virtuellen Anwendung eine erste Ereignisressource zu erhalten, die sich in einem temporären Zustand befindet und die durch Ausführen eines ersten Ereignisses durch ein erstes Konto des Clients der virtuellen Anwendung erzeugt wird;
eine erste Umwandlungseinheit (20), die eingerichtet ist, eine zweite Ereignisressource, die sich in dem temporären Zustand befindet und die vor der ersten Ereignisressource erhalten wird, in die zweite Ereignisressource in einem Normalzustand umzuwandeln, wobei die Ereignisressource in dem Normalzustand an einem voreingestellten Speicherort gespeichert wird, und nachdem die zweite Ereignisressource in die zweite Ereignisressource in dem Normalzustand umgewandelt worden ist, die zweite Ereignisressource zu der Ereignisressource in dem Normalzustand, die erhalten worden ist, hinzugefügt wird, sodass Ereignisressourcen, die von dem temporären Zustand in den Normalzustand umgewandelt worden sind, fortlaufend akkumuliert werden;
eine erste Hinzufügungseinheit (30), die eingerichtet ist, die zweite Ereignisressource zu einer Ereignisressource hinzuzufügen, die sich in dem Normalzustand befindet und die erhalten worden ist;
eine Aktualisierungseinheit (40), die eingerichtet ist, wenn ein vorbestimmter Vorgang, der an der Ereignisressource in dem Normalzustand durchgeführt wird, detektiert wird, ein Attribut der virtuellen Anwendung des ersten Kontos in dem Client der virtuellen Anwendung zu aktualisieren;
eine Bestimmungseinheit (50), die eingerichtet ist, nachdem die zweite Ereignisressource zu einer Ereignisressource hinzugefügt worden ist, die sich in dem Normalzustand befindet und die erhalten worden ist, zu bestimmen, ob eine dritte Ereignisressource, die sich in dem temporären Zustand befindet und die durch Ausführen des ersten Ereignisses durch das erste Konto erzeugt wird, innerhalb eines ersten vorbestimmten Zeitsegments erhalten wird; und
eine Verarbeitungseinheit (60), die eingerichtet ist, falls bestimmt wird, dass die dritte Ereignisressource nicht innerhalb des ersten vorbestimmten Zeitsegments erhalten wird, die erste Ereignisressource in dem temporären Zustand zu löschen und die Ereignisressourcen in dem Normalzustand mit einer ersten vorbestimmten Geschwindigkeit zu verringern, sodass an dem voreingestellten Speicherort gespeicherte Ereignisressourcen allmählich verringert werden.

10. Vorrichtung nach Anspruch 9, ferner umfassend:
eine zweite Umwandlungseinheit (70), die eingerichtet ist, nachdem bestimmt worden ist, ob eine dritte Ereignisressource, die sich in dem temporären Zustand befindet und die durch Ausführen des ersten Ereignisses durch das erste Konto erzeugt wird, innerhalb eines ersten vorbestimmten Zeitsegments erhalten wird, falls bestimmt wird, dass die dritte Ereignisressource innerhalb des ersten vorbestimmten Zeitsegments erhalten wird, die erste Ereignisressource in dem temporären Zustand in die erste Ereignisressource in dem Normalzustand umzuwandeln; und
eine zweite Hinzufügungseinheit (80), die eingerichtet ist, die erste Ereignisressource zu den Ereignisressourcen hinzuzufügen, die sich in dem Normalzustand befinden und die erhalten worden sind.

11. Vorrichtung nach Anspruch 9, wobei die Aktualisierungseinheit (40) umfasst:
ein erstes Erhaltungsmodul (41), das eingerichtet ist, einen Ressourcenbereich zu erhalten, in den die Ereignisressource fällt; und
ein Aktualisierungsmodul (42), das eingerichtet ist, eine dem Ressourcenbereich entsprechende Aktualisierung an dem Attribut der virtuellen Anwendung des ersten Kontos in dem Client der virtuellen Anwendung durchzuführen.

12. Endgerät, eingerichtet zum Ausführen von Programmcode, wobei der Programmcode zum Ausführen von Schritten in dem Verfahren zum Aktualisieren eines Attributs einer virtuellen Anwendung nach einem der Ansprüche 1 bis 8 verwendet wird.

13. Speichermedium, eingerichtet zum Speichern von Programmcode, wobei der Programmcode zum Ausführen von Schritten in dem Verfahren zum Aktualisieren eines Attributs einer virtuellen Anwendung nach einem der Ansprüche 1 bis 8 verwendet wird.

## Revendications

1. Procédé de mise à jour d'un attribut d'application virtuelle exécuté par un terminal (104) ou un serveur (102), le procédé comprenant :
obtenir, dans un processus en cours d'exécution d'un client d'application virtuelle, une première ressource d'événement qui est dans un état temporaire et qui est générée par l'exécution d'un premier événement par un premier compte du client d'application virtuelle (S202) ;
convertir une deuxième ressource d'événement qui est dans l'état temporaire et qui est obtenue avant la première ressource d'événement en la deuxième ressource d'événement dans un état normal (S204), dans lequel
la ressource d'événement qui est dans l'état normal est stockée à un emplacement de stockage prédéfini, et
après que la deuxième ressource d'événement est convertie en la deuxième ressource d'événement dans l'état normal, la deuxième ressource d'événement est ajoutée à la ressource d'événement qui est dans l'état normal et qui a été obtenue, de manière à accumuler en continu des ressources d'événement qui ont été converties de l'état temporaire à l'état normal ;
ajouter la deuxième ressource d'événement à une ressource d'événement qui est dans l'état normal et qui a été obtenue (S206) ; et
lorsqu'une opération prédéterminée effectuée sur la ressource d'événement dans l'état normal est détectée, mettre à jour un attribut d'application virtuelle du premier compte dans le client d'application virtuelle (S208), dans lequel
après l'ajout de la deuxième ressource d'événement à une ressource d'événement qui est dans l'état normal et qui a été obtenue (S206), le procédé comprend en outre :
déterminer si une troisième ressource d'événement qui est dans l'état temporaire et qui est générée par l'exécution du premier événement par le premier compte est obtenue dans un premier segment de temps prédéterminé (S301) ; et
s'il est déterminé que la troisième ressource d'événement n'est pas obtenue dans le premier segment de temps prédéterminé, supprimer la première ressource d'événement dans l'état temporaire, et réduire les ressources d'événement dans l'état normal à une première vitesse prédéterminée (S302) de manière à réduire progressivement les ressources d'événement stockées à l'emplacement de stockage prédéfini.

2. Procédé selon la revendication 1, dans lequel après la détermination de savoir si une troisième ressource d'événement qui est dans l'état temporaire et qui est générée par l'exécution du premier événement par le premier compte est obtenue dans un premier segment de temps prédéterminé (S301), le procédé comprend en outre :
s'il est déterminé que la troisième ressource d'événement est obtenue dans le premier segment de temps prédéterminé, convertir la première ressource d'événement dans l'état temporaire en la première ressource d'événement dans l'état normal (S401) ; et
ajouter la première ressource d'événement aux ressources d'événement qui sont dans l'état normal et qui ont été obtenues (S402).

3. Procédé selon la revendication 1, dans lequel la mise à jour d'un attribut d'application virtuelle du premier compte dans le client d'application virtuelle (S208) comprend :
obtenir une plage de ressources dans laquelle tombe la ressource d'événement (S501) ; et
effectuer une mise à jour correspondant à la plage de ressources sur l'attribut d'application virtuelle du premier compte dans le client d'application virtuelle (S502).

4. Procédé selon la revendication 3, dans lequel l'exécution d'une mise à jour correspondant à la plage de ressources sur l'attribut d'application virtuelle du premier compte dans le client d'application virtuelle (S502) comprend :
si la plage de ressources est plus grande, augmenter ou réduire l'attribut d'application virtuelle selon une plus grande amplitude.

5. Procédé selon l'une quelconque des revendications 1 à 4, dans lequel la mise à jour d'un attribut d'application virtuelle du premier compte dans le client d'application virtuelle (S208) comprend au moins l'un parmi les éléments suivants :
augmenter une vitesse de déplacement du premier compte dans le client d'application virtuelle ;
augmenter une force d'attaque du premier compte dans le client d'application virtuelle ;
augmenter une valeur de santé du premier compte dans le client d'application virtuelle ;
augmenter une valeur magique du premier compte dans le client d'application virtuelle ; et
réduire un temps de recharge du premier compte dans le client d'application virtuelle.

6. Procédé selon l'une quelconque des revendications 1 à 4, dans lequel l'obtention d'une première ressource d'événement qui est dans un état temporaire et qui est générée par l'exécution d'un premier événement par un premier compte du client d'application virtuelle (S202) comprend :
obtenir un premier attribut d'une opération d'événement effectuée dans le premier événement et un deuxième attribut d'un objet d'opération de l'opération d'événement (S601) ; et
obtenir la première ressource d'événement correspondant au premier attribut et au deuxième attribut (S602).

7. Procédé selon la revendication 6, dans lequel l'obtention de la première ressource d'événement correspondant au premier attribut et au deuxième attribut (S602) comprend :
obtenir la première ressource d'événement correspondant au premier attribut et au deuxième attribut avec une probabilité prédéterminée.

8. Procédé selon l'une quelconque des revendications 1 à 4, dans lequel après l'ajout de la deuxième ressource d'événement à une ressource d'événement qui est dans l'état normal et qui a été obtenue (S206), le procédé comprend en outre :
afficher un identifiant d'invite sur une interface d'opération du client d'application virtuelle, dans lequel l'identifiant d'invite est utilisé pour inviter à effectuer l'opération prédéterminée sur la ressource d'événement dans l'état normal.

9. Dispositif de mise à jour d'un attribut d'application virtuelle, comprenant :
une unité d'obtention (10), configurée pour, dans un processus en cours d'exécution d'un client d'application virtuelle, obtenir une première ressource d'événement qui est dans un état temporaire et qui est générée par l'exécution d'un premier événement par un premier compte du client d'application virtuelle ;
une première unité de conversion (20), configurée pour convertir une deuxième ressource d'événement qui est dans l'état temporaire et qui est obtenue avant la première ressource d'événement en la deuxième ressource d'événement dans un état normal, dans lequel la ressource d'événement qui est dans l'état normal est stockée à un emplacement de stockage prédéfini, et après que la deuxième ressource d'événement est convertie en la deuxième ressource d'événement dans l'état normal, la deuxième ressource d'événement est ajoutée à la ressource d'événement qui est dans l'état normal et qui a été obtenue, de manière à accumuler en continu des ressources d'événement qui ont été converties de l'état temporaire à l'état normal ;
une première unité d'ajout (30), configurée pour ajouter la deuxième ressource d'événement à une ressource d'événement qui est dans l'état normal et qui a été obtenue ;
une unité de mise à jour (40), configurée pour, lorsqu'une opération prédéterminée effectuée sur la ressource d'événement dans l'état normal est détectée, mettre à jour un attribut d'application virtuelle du premier compte dans le client d'application virtuelle ;
une unité de détermination (50), configurée pour, après que la deuxième ressource d'événement est ajoutée à une ressource d'événement qui est dans l'état normal et qui a été obtenue, déterminer si une troisième ressource d'événement qui est dans l'état temporaire et qui est générée par l'exécution du premier événement par le premier compte est obtenue dans un premier segment de temps prédéterminé ; et
une unité de traitement (60), configurée pour, s'il est déterminé que la troisième ressource d'événement n'est pas obtenue dans le premier segment de temps prédéterminé, supprimer la première ressource d'événement dans l'état temporaire, et réduire les ressources d'événement dans l'état normal à une première vitesse prédéterminée de manière à réduire progressivement les ressources d'événement stockées à l'emplacement de stockage prédéfini.

10. Dispositif selon la revendication 9, comprenant en outre :
une deuxième unité de conversion (70), configurée pour, après que le fait de savoir si une troisième ressource d'événement qui est dans l'état temporaire et qui est générée par l'exécution du premier événement par le premier compte est obtenue dans un premier segment de temps prédéterminé a été déterminé, s'il est déterminé que la troisième ressource d'événement est obtenue dans le premier segment de temps prédéterminé, convertir la première ressource d'événement dans l'état temporaire en la première ressource d'événement dans l'état normal ; et
une deuxième unité d'ajout (80), configurée pour ajouter la première ressource d'événement aux ressources d'événement qui sont dans l'état normal et qui ont été obtenues.

11. Dispositif selon la revendication 9, dans lequel l'unité de mise à jour (40) comprend :
un premier module d'obtention (41), configuré pour obtenir une plage de ressources dans laquelle tombe la ressource d'événement ; et
un module de mise à jour (42), configuré pour effectuer une mise à jour correspondant à la plage de ressources sur l'attribut d'application virtuelle du premier compte dans le client d'application virtuelle.

12. Terminal, configuré pour exécuter un code de programme, le code de programme étant utilisé pour exécuter des étapes du procédé de mise à jour d'un attribut d'application virtuelle selon l'une quelconque des revendications 1 à 8.

13. Support de stockage, configuré pour stocker un code de programme, le code de programme étant utilisé pour exécuter des étapes du procédé de mise à jour d'un attribut d'application virtuelle selon l'une quelconque des revendications 1 à 8.
